# FASCICULE DE BREVET EUROPEEN

(11) **EP 4 449 094 B1**
(45) Date de publication et mention de la délivrance du brevet: **30.09.2026**
(21) Numéro de dépôt: 22836053.3
(22) Date de dépôt: 12.12.2022
(51) Int. Cl.: G01N 15/14

(54) **PROCÉDÉ ET APPAREIL DE SÉLECTION, DÉTECTION, COMPTAGE ET IDENTIFICATION DE POLLENS ET/OU DE MOISISSURES INITIALEMENT EN SUSPENSION DANS L'AIR ATMOSPHÉRIQUE**
VERFAHREN UND VORRICHTUNG ZUR AUSWAHL, DETEKTION, ZÄHLUNG UND IDENTIFIKATION VON POLLEN UND/ODER SCHIMMELPILZEN, DIE ANFÄNGLICH IN DER ATMOSPHÄRISCHEN LUFT SCHWEBEN.
METHOD AND APPARATUS FOR THE SELECTION, DETECTION, COUNTING AND IDENTIFICATION OF POLLEN AND/OR MOULDS INITIALLY SUSPENDED IN THE AIR.

(30) Priorité: 17.12.2021 FR 2113855
(43) Date de publication de la demande: 23.10.2024
(73) Titulaire: Commissariat à l'Energie Atomique et aux Energies Alternatives, 75015 Paris (FR)
(72) Inventeur: PAULUS, Caroline, 38054 GRENOBLE CEDEX 09 (FR); BLANC, Olivier, 38054 GRENOBLE CEDEX 09 (FR); MERMET, Xavier, 38054 GRENOBLE CEDEX 09 (FR); ROUX, Jean-Maxime, 38054 GRENOBLE CEDEX 09 (FR)
(74) Mandataire: Ipsilon
(86) Numéro de dépôt international: PCT/EP2022/085322
(87) Numéro de publication internationale: WO 2023/110716

(56) Documents cités:
- US-A1- 2013 242 301
- US-A1- 2018 189 963
- US-A1- 2021 341 359
- CROUZY BENOÎT ET AL: "All-optical automatic pollen identification: Towards an operational system", ATMOSPHERIC ENVIRONMENT, ELSEVIER, AMSTERDAM, NL, vol. 140, 2 June 2016 (2016-06-02), pages 202 - 212, XP029631512, ISSN: 1352-2310, DOI: 10.1016/J.ATMOSENV.2016.05.062

## Description

### Domaine technique

La présente invention concerne le domaine de la détection et de l'identification de pollens et/ou de moisissures susceptibles d'être présentes en suspension dans l'air atmosphérique.

Par « pollen», on entend ici et dans le cadre de l'invention, tout grain ou particule de taille microscopique produit(e) par les étamines et qui représente un élément des végétaux à fleurs. Par « moisissure », on entend ici et dans le cadre de l'invention, tout spore issu d'une moisissure biologique constituée par un champignon de taille microscopique qui pousse dans une forme de filaments multicellulaires ou unicellulaires.

On utilise ci-après indifféremment le terme « grain » ou « particule » pour désigner un pollen ou un spore de moisissure.

L'invention vise en premier lieu à proposer un appareil qui permettre de détecter, compter et identifier les pollens et/ou de moisissures présents dans l'air atmosphérique, quel que soit leur type et ce en temps réel, c'est-à-dire une identification sans attente, immédiate.

Bien que décrite en référence avec les pollens, l'invention peut tout aussi bien être mise en œuvre pour la sélection, la détection le comptage et l'identification de moisissures.

### Technique antérieure

Depuis les années 1970, la prise de conscience des effets environnementaux et sanitaires engendrés par les aérosols a été à l'origine de développements technologiques nouveaux, afin de mieux évaluer les risques associés.

Les particules d'origine biologique transportées par le vent, comme les pollens et les moisissures, sont présentes dans l'air atmosphérique. Selon leur potentiel allergisant, ces particules peuvent provoquer des symptômes d'allergie chez les personnes sensibles. En Europe, on estime que 20% de la population souffre d'allergie aux pollens et/ou aux moisissures. Les allergies saisonnières aux pollens sont donc un problème de santé public.

En disposant d'une information fiable en temps réel sur les pollens présents dans l'air atmosphérique, il serait possible de mieux adapter les traitements des personnes souffrant des allergies afférentes.

La mesure de particules de pollens dans l'air atmosphérique est une mesure très particulière de par leurs tailles (diamètre en général de l'ordre de 20 à 40 µm), leurs morphologies (formes très variées) et leurs faibles concentrations dans l'air relativement aux particules plus fines notamment les particules, appelées PM2.5, dont le diamètre aérodynamique est inférieur à 2,5 µm.

Typiquement, sur ce dernier point, la concentration de pollens dans l'air atmosphérique peut être de l'ordre de 500 pollens/m³ au plus fort de la saison pollinique, tandis que celle des PM2.5 est de 10⁶/m³.

Il existe actuellement plusieurs méthodes et systèmes afférents permettant l'identification de grains de pollens.

Depuis de nombreuses années, la méthode de référence pour mesurer les concentrations de particules biologiques est la méthode dite Hirst : des capteurs volumétriques, aspirent un flux d'air en continu, les particules biologiques aspirées dont les pollens venant impacter une bande sous la forme d'un disque adhésif tournant. La collecte dure en moyenne 1 semaine. Le disque adhésif est ensuite récupéré par un opérateur et l'identification est réalisée exclusivement par l'observation au microscope optique par un opérateur formé à la reconnaissance des pollens. Il y a donc en moyenne 10 jours de délai pour obtenir la concentration des pollens à un moment donné. Cette méthode Hirst souffre donc d'un délai trop long et elle nécessite d'avoir recours à un technicien expérimenté ce qui augmente les coûts et introduit potentiellement des erreurs de mesure.

D'autres méthodes et systèmes afférents permettant des mesures automatisées à des fins de numération et identification de pollens avec des temps de réponse beaucoup plus courts voient actuellement le jour.

On peut classer essentiellement en trois catégories les solutions déjà existantes pour réaliser la numération et identification de pollens.

La première solution consiste essentiellement à aspirer l'air ambiant, à collecter par impact sur un disque adhésif des particules de pollens puis à faire une analyse d'images de ce disque, obtenues par microscope optique et une reconnaissance par traitements d'images automatiques à base de reconnaissance de formes.

On peut citer par exemple le détecteur de pollens commercialisé sous la dénomination «BAA500 » par la société Hund, qui comprend une caméra à capteur CCD (acronyme anglo-saxon pour « Charge Coupled Device » et une unité de traitement d'images qui extrait les paramètres morphologiques de chaque particule collectée. Ce détecteur peut analyser jusqu'à un disque par heure.

La deuxième solution consiste également à aspirer l'air ambiant et à caractériser chimiquement les particules aspirées à partir de techniques spectrométriques Raman et spectroscopie infrarouge à transformée de Fourier ou spectroscopie IRTF (acronyme anglo-saxon FTIR pour « Fourier Transform InfraRed spectroscopy »).

On peut citer par exemple l'appareil commercialisé sous la dénomination « Rapid-E » par la société PLAIR, dans lequel les particules aspirées passent une à une devant deux lasers dont un infrarouge et un ultraviolet. L'illumination infrarouge permet d'étudier la diffusion élastique pouvant varier entre deux espèces de pollens. Les ultra-violets permettent l'excitation d'éléments fluorescents endogènes. Un spectre est mesuré ainsi qu'une mesure du temps de vie de la fluorescence.

L'appareil commercialisé sous la dénomination «KH300 » par la société SHINYEI, est analogue mais exclusivement destiné à la détection des pollens de cèdre japonais : il comprend un laser devant lequel chaque particule de pollen aspirée passe. L'intensité de la lumière diffusée par celle-ci est mesurée par deux photodétecteurs agencés sous deux angles différents. Le rapport des intensités mesurées permet de différencier les pollens de cèdre des autres particules.

La demande de brevet WO 2021/136889 A1 divulgue une méthode consistant à aspirer l'air ambiant puis à mesurer, sous différents angles, au moyen de photodétecteurs, l'intensité de diffusion de la lumière engendrée par le passage d'une particule aspirée de pollen dans un faisceau lumineux. Pour un angle donné, la diffusion est dominée par certaines caractéristiques de la particule telle que sa taille, son indice de réfraction, sa morphologie... Une comparaison des rapports de valeurs mesurées entre elles à une base de données permet la discrimination des différentes espèces de pollens.

Enfin, les pollens peuvent être identifiés par une caractérisation biomoléculaire et identification de séquences d'ADN. Toutefois cette approche est plus complexe que les analyses purement optiques précitées en ce que l'ADN des pollens doit être extrait puis mélangé à des réactifs, coûteux et conservés à basse température, en des quantités très précises puis chauffés pendant au moins 10 minutes. Ces caractérisations sont ainsi plutôt menées en laboratoire par du personnel qualifié.

US 2013/242301 A1 concerne des méthodes et des dispositifs pour l'imagerie holographique sans contact de particules d'aérosol, telles que le pollen.

Toutes les solutions évoquées nécessitent l'utilisation d'appareils coûteux. Soit les échantillons sont analysés en laboratoire diminuant la fréquence d'échantillonnage, soit les appareils sont installés en extérieur dans des boîtiers très volumineux et très coûteux.

Il existe par conséquent un besoin d'améliorer les méthodes existantes et appareils afférents pour détecter, compter et identifier de manière automatique les pollens et/ou les moisissures présents dans l'air atmosphérique, quel que soit leur type et ce en temps réel, et à moindre coût.

Le but de l'invention est de répondre au moins en partie à ce besoin.

### Exposé de l'invention

Pour ce faire, l'invention concerne, sous l'un de ses aspects, un appareil de sélection, détection, comptage et identification de pollens et/ou de moisissures initialement en suspension dans l'air atmosphérique comprenant :
- un conduit pour faire circuler un flux d'air atmosphérique susceptible de contenir des particules de pollens depuis une entrée d'air jusqu'à une sortie d'air;
- un dispositif de concentration des particules de pollens, relié à l'entrée d'air et adapté pour concentrer des particules présentes dans l'air atmosphérique et laisser circuler en aval dans le conduit les particules de pollens dans une gamme de taille sélectionnée;
- un dispositif de détection de particules de pollens, agencé autour du conduit et en aval du dispositif de concentration , comprenant :
   une source d'illumination à laser(s), adaptée pour illuminer le flux d'air circulant dans le conduit,
   au moins un photodétecteur adapté pour détecter par diffusion ou par fluorescence le passage de chaque particule de pollen et/ou de moisissure dans le flux d'air illuminé par la source d'illumination du dispositif de détection;
- un microscope sans lentille, agencé autour du conduit et en aval du dispositif de détection, comprenant :
   - une source d'illumination, adaptée pour illuminer le flux d'air circulant dans le conduit,
   - au moins une caméra en mode multi-acquisition comportant un capteur d'image de type CMOS, agencé en regard de la source d'illumination du microscope sans lentille et relié au photodétecteur de sorte à déclencher l'acquisition d'un nombre N d'images holographiques produites par la lumière diffractée par chaque particule de pollen et/ou de moisissure illuminée et détectée, le capteur d'image de type CMOS étant exposé q fois pendant le temps d'acquisition d'une même image holographique enregistrée;
   - une unité de traitement d'images, reliée à la caméra en mode multi-acquisition, adaptée pour reconstruire numériquement au moins une des N images holographiques sur laquelle est présente p fois une même particule de pollen et/ou de moisissure détectée puis identifier chaque particule de pollen et/ou de moisissure en fonction de sa taille et/ou sa morphologie, p étant inférieur ou égal à q, et, q et p étant chacun supérieur ou égal à deux.

Chaque particule de pollen et/ou de moisissures est identifiée en fonction de sa taille et/ou sa morphologie.

Selon un mode de réalisation avantageux, le dispositif de concentration des particules est un impacteur virtuel.

Pour rappel, un impacteur fonctionne en accélérant les particules en suspension dans l'air au moyen d'une buse calibrée pour les projeter sur une plaque de collection intercalée face au jet d'air. Les particules les plus grosses, dont l'inertie dépasse une certaine valeur seuil, ne peuvent pas suivre les filets d'air et impactent la plaque de collection. Les particules plus fines contournent la plaque en suivant le flux d'air.

Un impacteur virtuel met en œuvre le même principe mais sans plaque de collection solide. Cette plaque solide est généralement remplacée par un tube calibré dans lequel le débit est inférieur au débit entrant. Selon une variante, de l'air peut être injectée à contre-courant de l'écoulement entrant.

De préférence, l'impacteur virtuel est adapté pour réduire le débit d'air dans le conduit entre l'entrée d'air et la sortie d'air d'un facteur au moins égal à 5, de préférence de l'ordre de 10.

De préférence encore, l'impacteur virtuel est adapté pour laisser circuler en aval dans le conduit des particules de taille supérieure à 5 µm.

Selon une caractéristique avantageuse, le(s) laser(s) de la source d'illumination du dispositif de détection est(sont) à émission dans le visible, par exemple dans le rouge.

Selon une variante de réalisation avantageuse, le(s) photodétecteur(s) du dispositif de détection est(sont) une(des) photodiode(s), en face de laquelle (chacune desquelles) est agencée un miroir parabolique.

Selon une autre variante de réalisation avantageuse, la source d'illumination du microscope sans lentille est une source d'illumination à diode(s). De préférence, la(les) diode(s) de la source d'illumination du microscope sans lentille est(sont) une(des) diode(s) électroluminescente(s) à émission dans le bleu.

Selon un mode de réalisation avantageux, l'unité de traitement est en outre adaptée pour fusionner les données des N images holographiques avec les signaux d'intensité de diffusion de chaque particule fournis par le(s) photodétecteur(s).

Selon un autre mode de réalisation avantageux, l'appareil comprend un boitier portable logeant au moins le conduit, le dispositif de concentration des particules de pollens et/ou de moisissures, le dispositif de détection de particules de pollens et/ou de moisissures, et le microscope sans lentille.

L'invention a également pour objet un procédé de sélection, détection, comptage et identification de pollens et/ou de moisissures initialement en suspension dans l'air atmosphérique, mis en œuvre par l'appareil qui vient d'être décrit, comprenant les étapes suivantes :
a/ aspiration dans un conduit, de préférence agencé à la verticale, depuis une entrée jusqu'à une sortie d'un flux d'air atmosphérique susceptible de contenir des pollens et/ou des moisissures ;
b/ sélection d'une gamme donnée de particules de pollens parmi les particules aspirées dans le flux d'air;
c/ illumination du flux d'air et détection par diffusion ou par fluorescence du passage de chaque particule de pollen et/ou de moisissure sélectionnée ;
d/ enregistrement d'un nombre N d'images holographiques produites par la lumière diffractée par chaque particule de pollen et/ou de moisissure illuminée et détectée ;
e/ reconstruction numérique d'au moins une image holographique sur laquelle est présente une particule de pollen et/ou de moisissure détectée puis identification, à partir de ladite image reconstruite, de chaque particule de pollen et/ou de moisissure en fonction de sa taille et/ou sa morphologie.

De préférence, la détection selon l'étape c/ est réalisée à 90° de la source lumineuse illuminant le flux d'air.

De préférence encore, la détection selon l'étape c/ permet de déclencher l'acquisition des N images holographiques.

De préférence, le capteur d'image de type CMOS est exposé q fois pendant le temps acquisition d'une même image holographiques enregistrée durant l'étape d/, q étant un nombre supérieur ou égal à deux.

De préférence, l'image reconstruite à l'étape e/ comprend au moins une même particule de pollen et/ou de moisissures présente p fois, p étant inférieur ou égal à q et supérieur ou égal à deux.

Selon une variante avantageuse, l'étape e/ comprend la fusion des données des N images holographiques avec les signaux d'intensité de diffusion de chaque particule fournis par le(s) photodétecteur(s).

Selon un mode de réalisation avantageux, l'identification de l'image sélectionnée selon l'étape e/ est réalisée par un dispositif d'apprentissage profond, de préférence un réseau de neurones convolutifs.

Selon ce mode et une variante avantageuse, l'étape e/ comprend les étapes suivantes :
e1/ création d'une base d'apprentissage comportant des images de pollens et/ou de moisissures, ou « images connues», chaque image connue étant celle d'un pollen et/ou d'une moisissure connu(e);
e2/ entraînement du dispositif d'apprentissage profond, au moyen de la base d'apprentissage;
e3/ soumission de l'image sélectionnée audit au moins un dispositif d'apprentissage profond de manière qu'il détermine au moins une probabilité relative à l'image sélectionnée;
e4/ détermination, en fonction de ladite probabilité, de l'appartenance du pollen et/ou de la moisissure de l'image sélectionnée au pollen et/ou de la moisissure connu(s).

Ainsi, l'invention consiste essentiellement en un appareil qui permet l'aspiration de l'air, la concentration des particules de pollen et/ou de moisissure en suspension dans l'air, la détection du passage de chaque particule de pollen et/ou de moisissure, le déclenchement de la prise d'image du pollen et/ou de la moisissure avec un microscope sans lentille, un comptage du nombre de pollens et/ou de moisissures et une identification des pollens et/ou de moisissures grâce à l'analyse des images dynamiques acquises.

Au final, l'invention apporte de nombreux avantages parmi lesquels on peut citer:
- du fait de la combinaison de ses composants technologiques (impacteur virtuel, détection à photodiode, microscope sans lentille), l'appareil selon l'invention surmonte les différentes limitations (temps de réponse, automatisme, coût, encombrement) des systèmes selon l'état de l'art rendant possible la mesure en continu de la concentration des différentes familles de pollens et/ou de moisissures (numération et identification) ;
- par-là, réponse au problème de santé public majeur que sont les allergies saisonnières aux pollens et/ou de moisissures.

En outre, le fait d'exposer q fois le capteur d'image pour chacune des N images holographiques permet d'obtenir, sur certaines desdites images, plusieurs vues d'une même particule de pollen et/ou de moisissure lors de son déplacement pendant les différentes expositions. La multiplicité des vues d'une même particule de pollen et/ou de moisissure permet d'avoir plus d'informations à analyser sur ladite particule, et donc par là même, d'améliorer l'identification de ladite particule. Il est notamment possible d'observer ladite particule selon différentes orientations angulaires et/ou d'augmenter le rapport signal sur bruit de l'image en observant la même particule plusieurs fois selon une même orientation angulaire.

Le nombre q d'expositions peut être choisi dans les paramètres de configuration de la caméra. Par exemple, la caméra peut être une « *caméra USB 3.0* » commercialisée par la société « *Imaging Development Systems* ».

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique d'un appareil de sélection, détection, comptage et identification de pollens et/ou de moisissures initialement en suspension dans l'air atmosphérique, selon l'invention.
[Fig 2] la figure 2 est une vue schématique montrant plus en détail la partie de détection, comptage et identification de l'appareil selon la figure 1.
[Fig 3] la figure 3 illustre le signal de diffusion détecté par un photodétecteur de la partie de détection de l'appareil, avec des pics correspondant au passage d'un grain de pollen.
[Fig 4] la figure 4 illustre la conversion des pics analogiques du signal brut détecté de la figure 3 en signaux logiques.
[Fig 5] la figure 5 illustre un exemple d'image holographique non reconstruite contenant un grain de pollen donné enregistrée par la caméra en mode multi-acquisition , le grain de pollen étant vu cinq fois par le capteur d'image.
[Fig 6] la figure 6 illustre un exemple d'image finale reconstruite par l'unité de traitement d'images de l'appareil à partir de l'image holographique brute de la figure 5.

### Description détaillée

Dans la description qui va suivre ainsi que dans l'ensemble de la demande, les termes « entrée », « sortie », « amont », « aval », sont utilisés par référence au sens de circulation du flux d'air atmosphérique contenant les pollens et/ou les moisissures dans l'appareil selon la présente invention.

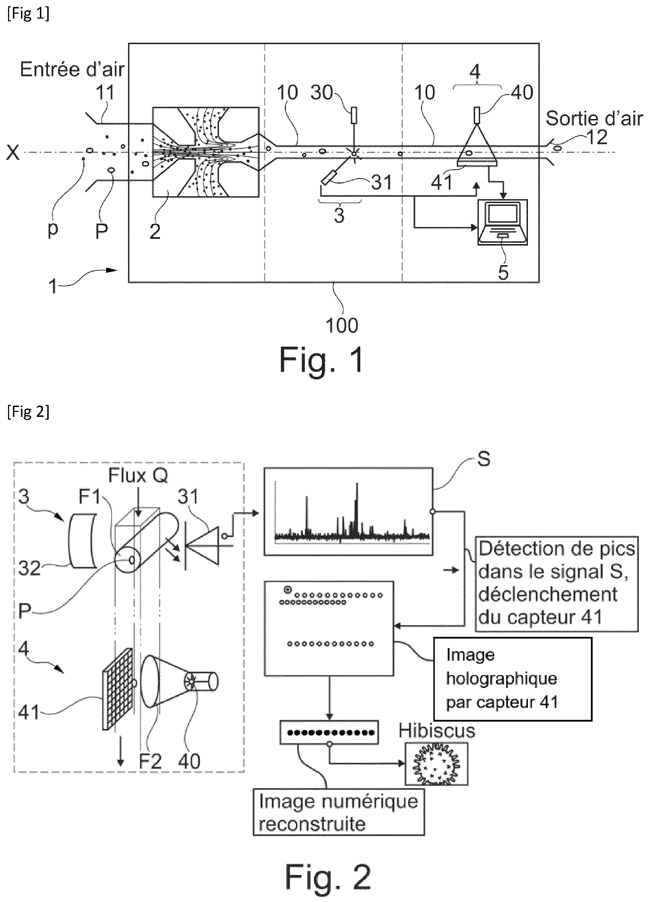

On a représenté aux figures 1 et 2, un appareil 1 selon l'invention avec la détection de pollens qu'il réalise.

Il comprend tout d'abord un conduit 10 pour faire circuler un flux d'air atmosphérique susceptible de contenir des particules de pollens depuis une entrée d'air 11 jusqu'à une sortie d'air 12. Ce conduit 10 doit être transparent au moins aux longueurs d'ondes des sources d'illumination de l'appareil comme décrit ci-après. Le matériau du conduit 10 peut être du quartz, du verre, ou tout plastique de qualité optique.

A titre d'exemple, le conduit 10 est un tube droit, de section rectangulaire, d'épaisseur de paroi de l'ordre de 1mm et de section interne égale à 7,2x2mm.

Un impacteur virtuel 2 est agencé en aval de l'entrée d'air 11. Il permet à la fois de réduire le débit d'air d'un facteur 10 et de réduire la concentration dans le système de détection des particules p non recherchées d'une taille inférieure à 5µm. L'impacteur virtuel laisse circuler préférentiellement en aval dans le conduit 10 les particules P de taille supérieure à 5µm parmi lesquelles se trouvent les particules à analyser. A titre d'exemple, l'impacteur virtuel 2 peut être le dispositif commercialisé sous la dénomination « PCVI 8100 » par la société Brechtel.

Un dispositif de détection 3 de particules de pollens est agencé autour du conduit 10 et en aval de l'imageur virtuel 2. Ce dispositif 3 comprend un laser 30 à rouge (670nm) qui est adapté pour illuminer le flux d'air Q circulant dans le conduit 10, et une photodiode 31 adaptée pour détecter par diffusion ou par fluorescence le passage de chaque particule de pollens dans le flux d'air illuminé par la source d'illumination. Afin de maximiser la quantité de lumière détectée par la photodiode 31, un miroir parabolique est avantageusement agencé de l'autre côté du conduit 10 symétriquement à la photodiode 31. De préférence, la photodiode 31 utilisée a une grande surface, typiquement de l'ordre de 1cm².

Un microscope sans lentille 4 est agencé autour du conduit 10 et en aval du dispositif de détection 3. Ce microscope sans lentille 4 comprend une diode 40 adaptée pour illuminer le flux d'air Q circulant dans le conduit 10, et un capteur d'image de type CMOS 41, agencé en regard de la diode 40 et relié à la photodiode 31 de sorte à déclencher la prise d'un nombre N d'images holographiques produites par la lumière diffractée par chaque particule de pollens illuminée et détectée, le capteur d'image étant adapté pour enregistrer les N images holographiques. Le capteur d'image CMOS 41 est avantageusement intégré dans une caméra.

Il est possible d'utiliser préférentiellement une caméra en mode multi-acquisition. La caméra en mode multi-acquisition peut être une caméra CMOS commercialisée sous la dénomination sous la dénomination « UI-3250CP Monochrome 1600x 1200 pixels » par la société IDS « *Imaging Development Systems* »*.*

Une telle caméra en mode multi-acquisition permet d'obtenir sur une image enregistrée plusieurs vues d'un objet qui se déplace, sans flou associé au mouvement. Le capteur d'image de type CMOS 41 est ainsi exposé q fois pendant le temps d'acquisition d'une même image holographique enregistrée. Le fait d'exposer q fois le capteur pour chacune des N images holographiques permet d'obtenir, sur lesdites images, plusieurs vues d'une même particule de pollen et/ou de moisissure lors de son déplacement pendant les différentes expositions. La multiplicité des vues d'une même particule de pollen et/ou de moisissure permet d'avoir plus d'informations à analyser sur ladite particule, et donc par là même, d'améliorer l'identification de ladite particule. Il est notamment possible d'observer ladite particule selon différentes orientations angulaires et/ou d'augmenter le rapport signal sur bruit de l'image en observant la même particule plusieurs fois selon une même orientation angulaire.

A titre d'exemple, la diode 40 est une DEL fibrée à une longueur d'onde de 470nm. La diode 40 est agencée à une distance comprise entre 4 et 12 cm du conduit 10. La caméra intégrant le capteur CMOS 41 est collée contre le conduit 10. Ainsi, du fait de l'épaisseur de paroi de ce dernier, les grains de pollens qui circulent dans le conduit 10 sont distants de 1 à 3 mm du capteur 41.

Enfin, l'appareil 1 comprend une unité de traitement d'images 5 reliée au capteur d'image CMOS 41.

Selon l'invention, comme détaillé ci-après, cette unité 5 est adaptée pour reconstruire numériquement au moins une des N images holographiques sélectionnée parmi les N images enregistrées, l'image holographique reconstruite présentant une particule de pollen et/ou de moisissure. En outre, l'unité de traitement d'images 5 est adaptée pour détecter puis identifier chaque particule de pollen en fonction de sa taille et/ou sa morphologie. Pour la reconstruction numérique des images holographiques, on pourra se référer à des algorithmes décrits dans les demandes de brevet WO2017/162985 (étapes 100 à 170) ou WO2016/189257 (étapes 100 à 500).

Tous les composants 10, 2, 3, 4 voire l'unité 5 qui sont compacts peuvent être logés dans un même boitier portable 100. On peut envisager une connexion à distance par protocole de communication sans fil, de type entre les composants 10, 2, 3, 4 et l'unité 5. On peut aussi envisager d'intégrer dans le boitier 100un microprocesseur en lieu et place d'une unité 5 à part entière.

On décrit maintenant un exemple de fonctionnement de l'appareil.

On précise tout d'abord que l'axe longitudinal X du conduit est selon la verticale. Cela permet de réduire les phénomènes de sédimentation des particules et un écoulement en continu.

Etape a/: on réalise une aspiration dans le conduit 10 des particules présentes dans l'atmosphère à un débit de l'ordre de 10L/min.

Etape b/: au passage dans l'impacteur virtuel 2, le flux d'air est réduit d'un facteur 10 pour atteindre 1L/min dans le canal 10 menant au détecteur et les particules p de taille inférieure à 5µm sont évacuées dans le flux d'air de 9L/min. Les pollens P de taille supérieure à 5µm environ circulent alors en aval dans le conduit 10.

Etape c/: on illumine le flux d'air par le laser 30 selon un faisceau F1 et la photodiode 31 détecte par diffusion latérale ou par fluorescence le passage de chaque particule de pollen sélectionnée.

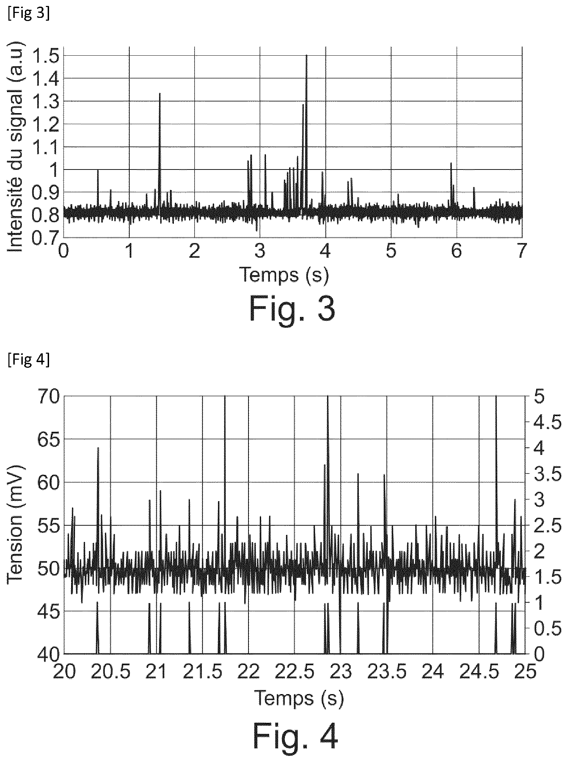

Plus précisément, la lumière diffusée par les grains de pollens à 90° par rapport à l'axe d'illumination est mesurée par la photodiode 31. Le signal analogique fourni par cette photodiode 31 indique la variation de lumière au sein du conduit dans lequel passe les pollens. Le passage d'un pollen induit une forte augmentation du signal de diffusion et donc un pic dans le signal détecté par la photodiode. Un exemple de signal brut obtenu S est montré à la figure 3.

Un algorithme numérique analyse en temps réel le signal brut fourni par la photodiode pour détecter les pics indiquant le passage de particules dans le conduit 10.

Il peut s'agir d'un algorithme de type Z-score mesurant l'écart d'un point à la moyenne en termes d'écart type, selon la formule suivante : $Z = \frac{X - μ}{σ}$ où X est la valeur du point étudier µ est la moyenne du signal, σ l'écart type du groupe et Z le score obtenue. Si Z dépasse un certain seuil choisi, on considère que le point correspond au passage d'une particule dans le conduit. A titre d'exemple, la moyenne glissante à partir des pics de la figure 3 est calculée sur 32 points et le seuil est de 2 (a.u).

Un signal logique est alors généré pour chaque pic détecté, après un certain délai correspondant à une valeur choisi inférieure au temps de vol moyen des particules dans le conduit 10 entre le dispositif de détection 3 et le microscope sans lentille 4. Ce délai est déterminé expérimentalement. Un exemple de conversion des pics analogiques en signaux logiques est montré à la figure 4 dans laquelle le signal du haut est celui brut de la photodiode 31 et celui du bas est le signal logique émis pour chaque pic.

Le signal analogique est alors envoyé vers la caméra en mode multi-acquisition intégrant le capteur CMOS 41 afin de déclencher l'acquisition et d'enregistrer une séquence de N images holographiques pour s'assurer ainsi de prendre les images au moment du passage de la particule de pollen et/ou de moisissure devant la caméra en mode multi-acquisition. Ce déclenchement permet de réduire la quantité d'images à prendre et à traiter par rapport à une prise d'image en continu. Autrement dit, la détection selon l'étape c/ permet de déclencher l'acquisition des N images holographiques en aval dans le conduit 10.

Etape d/ : Au déclenchement de la caméra en mode multi-acquisition , une acquisition d'images est faite avec le microscope sans lentille 4. Le capteur CMOS 41 enregistre alors un nombre N d'images holographiques produites par la lumière diffractée par chaque particule de pollens illuminée par le faisceau F2 de la diode 40. En outre, pendant le temps d'acquisition de chacune des N images holographiques enregistrées, le capteur d'image de type CMOS 41 est exposé q fois.

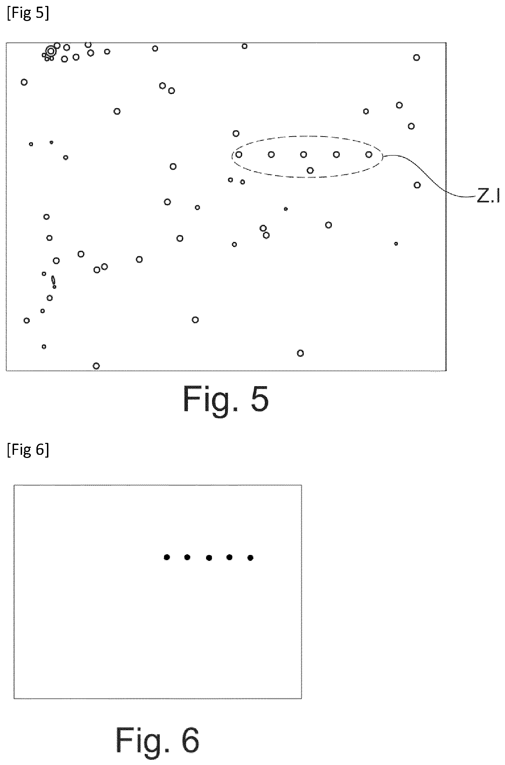

Un exemple d'image holographique est donné en figure 5 avec une zone d'intérêt Z.I d'un pollen enregistré. Dans cet exemple, sur cette image faisant partie des N images holographiques enregistrées, le pollen a été vu 5 fois par l'imageur CMOS 41 de la caméra en mode multi-acquisition. Dans cet exemple, le capteur d'image de type CMOS 41 a été exposé au moins 5 fois pendant le temps d'acquisition de l'image holographique de la figure 5 ; q étant supérieur ou égal à 5.

Etape e/ : l'unité de traitement 5 reconstruit numérique l'image holographique sur laquelle est présente une particule de pollen et/ou de moisissure et procède à son identification, à partir de l'image reconstruite, en fonction de sa taille et/ou sa morphologie

La reconstruction et le pré-traitement des images peut être réalisée de la manière suivante.

A partir de la séquence des N images holographiques obtenues, une image moyenne est calculée. Cette image, appelée « background », représente l'ensemble du fond qui ne correspond pas aux objets en mouvement.

Un algorithme numérique, par exemple celui connu sous la dénomination « L1 Sobel » ou encore celui décrit dans les demandes de brevet WO2017/162985 et WO2016/189257 précitées, reconstruit numériquement les hologrammes des images holographiques ainsi que l'image « background ». Plus précisément, chaque image holographique est reconstruite à différents pas, typiquement par pas de 50/100µm environ. En effet, du fait de l'épaisseur la paroi du conduit 10, les particules ne se trouvent pas toutes à la même distance Z. On obtient donc pour chaque image holographique de la série temporelle, des images reconstruites à différentes distances Z.

Ces images reconstruites à différentes distances Z sont ensuite combinées pour n'en former qu'une seule image finale reconstruite où chaque particule de ladite image est la plus nette possible. Ainsi, chaque pixel de l'image combinée sera obtenu en prenant la valeur minimale prise par ce pixel sur les images reconstruites. En effet, plus, la particule est nette et plus la valeur des pixels associés à la particule est faible. Cela provient du fait que la lumière est plus absorbée par chaque particule que par l'air qui l'entoure. Cette étape est réalisée pour chacune des images reconstruites à différentes distances Z et pour l'image « background ». A l'issue de cette étape, on obtient alors une image finale reconstruite sur lesquelles les particules sont nettes et une image « background ».

L'unité de traitement 5 réalise alors une soustraction de l'image background de l'image finale reconstruite résultant de la combinaison des images reconstruites à différentes distances Z, comme cela est illustré à la figure 6.

A partir des images obtenues, l'unité 5 peut caractériser les pollens en obtenant des informations sur leur taille ou leur morphologie.

Cette identification peut aussi être réalisée par un dispositif d'apprentissage profond, de préférence un réseau de neurones convolutifs.

Ainsi, l'identification peut comprendre les étapes suivantes :
Etape e1/ : création d'une base d'apprentissage comportant des images de pollens, ou « images connues», chaque image connue étant celle d'un pollen connu;
Etape e2/ : entraînement du dispositif d'apprentissage profond, au moyen de la base d'apprentissage ;
Etape e3 / : soumission de l'image sélectionnée audit au moins un dispositif d'apprentissage profond de manière qu'il détermine au moins une probabilité relative à l'image sélectionnée;
Etape e4/ : détermination, en fonction de ladite probabilité, de l'appartenance du pollen de l'image sélectionnée au pollen connu.

Pour améliorer l'identification des pollens, l'étape e/ peut aussi comprendre la fusion des données des N images holographiques avec les signaux d'intensité de diffusion de chaque particule fournis par la photodiode 31. Par exemple le signal de diffusion que l'on détecte peut lui aussi être discriminant et donc on peut fournir après apprentissage profond, une probabilité d'appartenance à une classe. Ainsi, il est envisageable de combiner les probabilités issues du signal de diffusion et de l'image issue du capteur d'image pour avoir une identification plus précise de chaque particule de pollen.

L'invention n'est pas limitée aux exemples qui viennent d'être décrits ; on peut notamment combiner entre elles des caractéristiques des exemples illustrés au sein de variantes non illustrées.

Dans l'exemple illustré, le dispositif et procédé de fonctionnement afférent s'intéressent aux pollens. Il est tout-à-fait envisageable de mettre en œuvre un tel dispositif pour la sélection, détection le comptage et l'identification de moisissures. De fait, les moisissures, le plus souvent de taille inférieure à 10µm, sont généralement plus petites que les pollens de taille le plus souvent supérieures à 20µm. Aussi, pour les moisissures, le microscope sans lentille 4 nécessiterait une résolution spatiale supérieure.

## Revendications

1. Appareil (1) de sélection, détection, comptage et identification de pollens et/ou de moisissures initialement en suspension dans l'air atmosphérique comprenant :
- un conduit (10) pour faire circuler un flux d'air atmosphérique susceptible de contenir des particules de pollens et/ou de moisissures depuis une entrée d'air (11) jusqu'à une sortie d'air (12);
- un dispositif de concentration (2) des particules de pollens et/ou de moisissures, relié à l'entrée d'air et adapté pour concentrer des particules présentes dans l'air atmosphérique et laisser circuler en aval dans le conduit les particules de pollens et/ou de moisissures dans une gamme de taille sélectionnée;
- un dispositif de détection (3) de particules de pollens et/ou de moisissures, agencé autour du conduit et en aval du dispositif de concentration , comprenant :
une source d'illumination à laser(s) (30), adaptée pour illuminer le flux d'air circulant dans le conduit,
au moins un photodétecteur (31) adapté pour détecter par diffusion ou par fluorescence le passage de chaque particule de pollen et/ou de moisissure dans le flux d'air illuminé par la source d'illumination du dispositif de détection ;
- un microscope sans lentille (4), agencé autour du conduit et en aval du dispositif de détection, comprenant :
∘ une source d'illumination (40), adaptée pour illuminer le flux d'air circulant dans le conduit,
∘ au moins une caméra en mode multi-acquisition comportant un capteur d'image de type CMOS (41), agencé en regard de la source d'illumination du microscope sans lentille et relié au photodétecteur de sorte à déclencher l'acquisition d'un nombre N d'images holographiques produites par la lumière diffractée par chaque particule de pollen et/ou de moisissure illuminée et détectée, le capteur d'image de type CMOS (41) étant exposé q fois pendant le temps acquisition d'une même image holographiques enregistrée ;
∘ une unité de traitement d'images (5), reliée à la caméra en mode multi-acquisition, adaptée pour reconstruire numériquement au moins une des N images holographiques sur laquelle est présente p fois une même particule de pollen et/ou de moisissure détectée puis identifier chaque particule de pollen et/ou de moisissure en fonction de sa taille et/ou sa morphologie, p étant inférieur ou égal à q, et, q et p étant chacun supérieur ou égal à deux.

2. Appareil selon la revendication 1, le dispositif de concentration étant un impacteur virtuel adapté pour réduire le débit d'air dans le conduit entre l'entrée d'air et la sortie d'air d'un facteur au moins égal à 5, de préférence de l'ordre de 10

3. Appareil selon la revendication 2, l'impacteur virtuel étant adapté pour laisser circuler en aval dans le conduit des particules de taille supérieure à 5 µm.

4. Appareil selon l'une des revendications précédentes, l'unité de traitement étant en outre adaptée pour fusionner les données des N images holographiques avec les signaux d'intensité de diffusion de chaque particule fournis par le(s) photodétecteur(s).

5. Appareil selon l'une des revendications précédentes, comprenant un boitier portable (100) logeant au moins le conduit, le dispositif de concentration des particules de pollens et/ou de moisissures, le dispositif de détection de particules de pollens et/ou de moisissures, et le microscope sans lentille.

6. Procédé de sélection, détection, comptage et identification de pollens et/ou de moisissures initialement en suspension dans l'air atmosphérique, mis en œuvre par l'appareil selon l'une des revendications précédentes, comprenant les étapes suivantes :
a/ aspiration dans un conduit, de préférence agencé à la verticale, depuis une entrée jusqu'à une sortie d'un flux d'air atmosphérique susceptible de contenir des pollens et/ou de moisissures;
b/ sélection d'une gamme donnée de particules de pollens et/ou de moisissures parmi les particules aspirées dans le flux d'air ;
c/ illumination du flux d'air et détection par diffusion ou par fluorescence du passage de chaque particule de pollen et/ou de moisissure sélectionnée ;
d/ enregistrement d'un nombre N d'images holographiques produites par la lumière diffractée par chaque particule de pollen et/ou de moisissure illuminée et détectée ;
e/ reconstruction numérique d'au moins une image holographique sur laquelle est présente une particule de pollen et/ou de moisissure détectée puis identification, à partir de ladite image reconstruite, de chaque particule de pollen et/ou de moisissure en fonction de sa taille et/ou sa morphologie.

7. Procédé selon la revendication 6, la détection selon l'étape c/ étant réalisée à 90° de la source lumineuse illuminant le flux d'air.

8. Procédé selon la revendication 6 ou 7, la détection selon l'étape c/ permettant de déclencher l'acquisition des N images holographiques.

9. Procédé selon l'une des revendications 6 à 8, le capteur d'image de type CMOS (41) étant exposé q fois pendant le temps acquisition d'une même image holographiques enregistrée durant l'étape d/, q étant un nombre supérieur ou égal à deux.

10. Procédé selon la revendication précédente, l'image reconstruite à l'étape e/ comprenant au moins une même particule de pollen et/ou de moisissures présente p fois, p étant inférieur ou égal à q et supérieur ou égal à deux.

11. Procédé selon l'une des revendications 6 à 10, l'étape e/ comprenant la fusion des données des N images holographiques avec les signaux d'intensité de diffusion de chaque particule fournis par le(s) photodétecteur(s).

12. Procédé selon l'une des revendications 6 à 11, l'identification de la particule de pollen et/ou de moisissures présente sur l'image sélectionnée selon l'étape e/ étant réalisée par un dispositif d'apprentissage profond, de préférence un réseau de neurones convolutifs.

13. Procédé selon la revendication précédente, l'étape e/ comprenant les étapes suivantes :
e1/ création d'une base d'apprentissage comportant des images de pollens et/ou de moisissures, ou « images connues», chaque image connue étant celle d'un pollen et/ou d'une moisissure connu(e);
e2/ entraînement du dispositif d'apprentissage profond, au moyen de la base d'apprentissage ;
e3/ soumission de l'image sélectionnée audit au moins un dispositif d'apprentissage profond de manière qu'il détermine au moins une probabilité relative à l'image sélectionnée;
e4/ détermination, en fonction de ladite probabilité, de l'appartenance du pollen et/ou de la moisissure de l'image sélectionnée au pollen et/ou de la moisissure connu(s).

## Patentansprüche

1. Vorrichtung (1) zum Auswählen, Detektieren, Zählen und Identifizieren von Pollen und/oder Schimmelpilzen, die anfänglich in atmosphärischer Luft suspendiert sind, umfassend:
- einen Kanal (10) zum Umwälzen eines atmosphärischen Luftstroms, der Partikel von Pollen und/oder Schimmelpilzen enthalten kann, von einem Lufteinlass (11) zu einem Luftauslass (12);
- eine Einrichtung (2) zum Konzentrieren der Partikel von Pollen und/oder Schimmelpilzen, die mit dem Lufteinlass verbunden ist und dazu ausgelegt ist, in der atmosphärischen Luft vorhandene Partikel zu konzentrieren und stromabwärts in dem Kanal die Partikel von Pollen und/oder Schimmelpilzen in einem ausgewählten Größenbereich umzuwälzen;
- eine Einrichtung (3) zum Detektieren von Partikeln von Pollen und/oder Schimmelpilzen, die um den Kanal herum und stromabwärts der Konzentrierungsvorrichtung angeordnet ist, umfassend:
eine Laserbeleuchtungsquelle (30), die dazu ausgelegt ist, den durch den Kanal strömenden Luftstrom zu beleuchten,
mindestens einen Photodetektor (31), der dazu ausgelegt ist, durch Streuung oder Fluoreszenz den Durchgang jedes Partikels eines Pollens und/oder Schimmelpilzes in dem Luftstrom zu detektieren, der durch die Beleuchtungsquelle der Detektionseinrichtung beleuchtet wird;
- ein Mikroskop ohne Linse (4), das um den Kanal und stromabwärts der Detektionseinrichtung angeordnet ist und Folgendes umfasst:
∘ eine Beleuchtungsquelle (40), die dazu ausgelegt ist, den in dem Kanal zirkulierenden Luftstrom zu beleuchten,
∘ mindestens eine Kamera im Mehrfachaufnahmemodus, die einen CMOS-Bildsensor (41) umfasst, der der Beleuchtungsquelle des Mikroskops ohne Linse gegenüberliegend angeordnet und mit dem Photodetektor verbunden ist, um die Erfassung einer Anzahl N von holographischen Bildern auszulösen, die durch das Licht erzeugt werden, das von jedem beleuchteten und detektierten Partikel eines Pollens und/oder Schimmelpilzes gebeugt wird, wobei der CMOS-Bildsensor (41) während der Erfassungszeit eines gleichen aufgezeichneten holografischen Bildes q-mal belichtet wird;
∘ eine Bildverarbeitungseinheit (5), die mit der Kamera im Mehrfachaufnahmemodus verbunden ist, die zum digitalen Rekonstruieren von mindestens einem der N holographischen Bilder ausgelegt ist, auf dem p-mal ein gleiches detektiertes Partikel eines Pollens und/oder Schimmelpilzes vorhanden ist, und dann Identifizieren jedes Partikels eines Pollens und/oder Schimmelpilzes gemäß seiner Größe und/oder Morphologie, wobei p kleiner oder gleich q ist, und wobei q und p jeweils größer oder gleich zwei sind.

2. Vorrichtung nach Anspruch 1, wobei die Konzentrierungsvorrichtung ein virtueller Impaktor ist, der dazu ausgelegt ist, den Luftdurchsatz in dem Kanal zwischen dem Lufteinlass und dem Luftauslass um einen Faktor von mindestens gleich 5, vorzugsweise in der Größenordnung von 10, zu reduzieren.

3. Vorrichtung nach Anspruch 2, wobei der virtuelle Impaktor dazu ausgelegt ist, zuzulassen, dass Partikel größer als 5 µm stromabwärts in dem Kanal fließen.

4. Vorrichtung nach einem der vorhergehenden Ansprüche, wobei die Verarbeitungseinheit außerdem dazu ausgelegt ist, die Daten der N holographischen Bilder mit den Streuintensitätssignalen jedes Partikels, die durch den oder die Photodetektoren bereitgestellt werden, zu fusionieren.

5. Vorrichtung nach einem der vorhergehenden Ansprüche, umfassend ein tragbares Gehäuse (100), das mindestens den Kanal, die Einrichtung zum Konzentrieren der Partikel von Pollen und/oder Schimmelpilzen, die Einrichtung zum Detektieren von Partikeln von Pollen und/oder Schimmelpilzen und das Mikroskop ohne Linse aufnimmt.

6. Verfahren zum Auswählen, Detektieren, Zählen und Identifizieren von Pollen und/oder Schimmelpilzen, die anfänglich in atmosphärischer Luft suspendiert sind, implementiert durch die Vorrichtung nach einem der vorhergehenden Ansprüche, umfassend die folgenden Schritte:
a/ Ansaugen eines atmosphärischen Luftstroms, der Pollen und/oder Schimmelpilze enthalten könnte, in einem Kanal, der vorzugsweise vertikal angeordnet ist, von einem Einlass zu einem Auslass;
b/ Auswählen einer bestimmten Reihe von Partikeln von Pollen und/oder Schimmelpilzen aus den in den Luftstrom angesaugten Partikeln;
c/ Beleuchten des Luftstroms und Detektieren des Durchgangs jedes ausgewählten Partikels eines Pollens und/oder Schimmelpilzes durch Streuung oder Fluoreszenz;
d/ Aufzeichnen einer Anzahl N holographischer Bilder, die durch das von jedem beleuchteten und detektierten Partikel eines Pollens und/oder Schimmelpilzes gebeugte Licht erzeugt werden;
e/ digitales Rekonstruieren mindestens eines holographischen Bildes, auf dem ein detektiertes Partikel eines Pollens und/oder Schimmelpilzes vorhanden ist, und anschließendes Identifizieren jedes Partikels eines Pollens und/oder Schimmelpilzes in Abhängigkeit von dessen Größe und/oder Morphologie aus dem rekonstruierten Bild.

7. Verfahren nach Anspruch 6, wobei die Detektion gemäß Schritt c/ bei 90° von der den Luftstrom beleuchtenden Lichtquelle durchgeführt wird.

8. Verfahren nach Anspruch 6 oder 7, wobei die Detektion gemäß Schritt c/ es ermöglicht, die Aufnahme der N holographischen Bilder auszulösen.

9. Verfahren nach einem der Ansprüche 6 bis 8, wobei der CMOS-Bildsensor (41) während der Erfassungszeit eines gleichen holographischen Bildes, das während des Schritts d/ aufgezeichnet wurde, q-mal belichtet wird, wobei q eine Zahl größer oder gleich zwei ist.

10. Verfahren nach dem vorhergehenden Anspruch, wobei das in Schritt e/ rekonstruierte Bild mindestens ein gleiches Partikel von Pollen und/oder Schimmelpilzen umfasst, das p-mal vorhanden ist, wobei p kleiner oder gleich q und größer oder gleich zwei ist.

11. Verfahren nach einem der Ansprüche 6 bis 10, wobei Schritt e/ das Fusionieren der Daten der N holographischen Bilder mit den Streuintensitätssignalen jedes Partikels, die durch den oder die Photodetektoren bereitgestellt werden, umfasst.

12. Verfahren nach einem der Ansprüche 6 bis 11, wobei die Identifizierung des in dem ausgewählten Bild vorhandenen Partikels von Pollen und/oder Schimmelpilzen gemäß Schritt e/ durch eine Deep-Learning-Einrichtung, vorzugsweise ein neuronales Faltungsnetz, durchgeführt wird.

13. Verfahren nach dem vorhergehenden Anspruch, wobei Schritt e/ die folgenden Schritte umfasst:
e1/ Erzeugen einer Lernbasis, die Bilder von Pollen und/oder Schimmelpilzen oder "bekannte Bilder" umfasst,
wobei jedes bekannte Bild das eines bekannten Pollens und/oder Schimmelpilzes ist;
e2/ Trainieren der Deep-Learning-Einrichtung mittels der Lernbasis;
e3/ Bearbeiten des ausgewählten Bildes mit der mindestens einen Deep-Learning-Einrichtung, damit sie mindestens eine Wahrscheinlichkeit relativ zu dem ausgewählten Bild bestimmt;
e4/ Bestimmen der Zugehörigkeit des Pollens und/oder des Schimmelpilzes des ausgewählten Bildes zu dem bekannten Pollen und/oder Schimmelpilz in Abhängigkeit von dieser Wahrscheinlichkeit.

## Claims

1. Apparatus (1) for selecting, detecting, counting and identifying pollen and/or mould initially suspended in atmospheric air, comprising:
- a duct (10) for making a flow of atmospheric air liable to contain pollen and/or mould particles flow from an air inlet (11) to an air outlet (12);
- a device (2) for concentrating pollen and/or mould particles, which is connected to the air inlet and configured to concentrate particles present in the atmospheric air and to let pollen and/or mould particles in a selected size range flow downstream through the duct;
- a device (3) for detecting pollen and/or mould particles, which is arranged around the duct and downstream of the concentrating device, comprising:
a light source (30) comprising one or more lasers, which is configured to illuminate the flow of air flowing through the duct,
at least one photodetector (31) configured to detect, through scattering or fluorescence, passage of each pollen and/or mould particle in the air stream illuminated by the light source of the detecting device;
- a lensless microscope (4), arranged around the duct and downstream of the detecting device, comprising:
∘ a light source (40) configured to illuminate the flow of air flowing through the duct,
∘ at least one camera operating in multi-acquisition mode, comprising a CMOS image sensor (41) that is arranged facing the light source of the lensless microscope and that is connected to the photodetector so as to trigger acquisition of a number N of holographic images, which are produced by light diffracted by each illuminated and detected pollen and/or mould particle, the CMOS image sensor (41) being exposed q times during the acquisition time of a given recorded holographic image;
∘ an image processing unit (5), connected to the camera operating in multi-acquisition mode, said unit being configured to digitally reconstruct at least one of the N holographic images in which a given detected pollen and/or mould particle is present p times, and then to identify each pollen and/or mould particle depending on its size and/or morphology, p being less than or equal to q, and q and p each being greater than or equal to two.

2. Apparatus according to Claim 1, the concentrating device being a virtual impactor configured to reduce the flow rate of air through the duct between the air inlet and the air outlet by a factor at least equal to 5, and preferably of the order of 10.

3. Apparatus according to Claim 2, the virtual impactor being configured to let particles of size larger than 5 µm flow downstream through the duct.

4. Apparatus according to any of the preceding claims, the processing unit further being configured to fuse the data of the N holographic images with the signals of scattering intensity of each particle delivered by the one or more photodetectors.

5. Apparatus according to any of the preceding claims, comprising a portable housing (100) accommodating at least the duct, the device for concentrating pollen and/or mould particles, the device for detecting pollen and/or mould particles, and the lensless microscope.

6. Method for selecting, detecting, counting and identifying pollen and/or mould initially suspended in atmospheric air, said method being implemented by the apparatus according to any of the preceding claims, and comprising the following steps:
a/ sucking through a duct, preferably arranged vertically, from an inlet to an outlet, a flow of atmospheric air liable to contain pollen and/or mould;
b/ selecting a given range of pollen and/or mould particles from the particles sucked into the flow of air;
c/ illuminating the flow of air and detecting, through scattering or fluorescence, passage of each selected pollen and/or mould particle;
d/ recording a number N of holographic images produced by light diffracted by each illuminated and detected pollen and/or mould particle;
e/ digitally reconstructing at least one holographic image in which is present a detected pollen and/or mould particle and then identifying, on the basis of said reconstructed image, each pollen and/or mould particle depending on its size and/or morphology.

7. Method according to Claim 6, the detection in step c/ being carried out at 90° from the light source illuminating the flow of air.

8. Method according to Claim 6 or 7, the detection in step c/ allowing the acquisition of the N holographic images to be triggered.

9. Method according to any of Claims 6 to 8, the CMOS image sensor (41) being exposed q times during the acquisition time of a given holographic image recorded during step d/, q being a number greater than or equal to two.

10. Method according to the preceding claim, the image reconstructed in step e/ comprising at least one given pollen and/or mould particle present p times, p being less than or equal to q and greater than or equal to two.

11. Method according to any of Claims 6 to 10, step e/ comprising fusion of the data of the N holographic images with the signals of scattering intensity of each particle delivered by the one or more photodetectors.

12. Method according to any of Claims 6 to 11, the identification of the pollen and/or mould particle present in the selected image in step e/ being carried out by a deep-learning device, preferably a convolutional neural network.

13. Method according to the preceding claim, step e/ comprising the following steps:
e1/ creating a training database containing images of pollen and/or mould, or "known images", each known image being the image of a known type of pollen and/or mould;
e2/ training the deep-learning device, by means of the training database;
e3/ subjecting the selected image to said at least one deep-learning device such that it determines at least one probability relative to the selected image;
e4/ determining, depending on said probability, whether the pollen and/or mould of the selected image is the known type of pollen and/or mould.
